# FASCICULE DE BREVET EUROPEEN

(11) **EP 2 140 319 B1**
(45) Date de publication et mention de la délivrance du brevet: **30.11.2011**
(21) Numéro de dépôt: 08719565.7
(22) Date de dépôt: 05.03.2008
(51) Int. Cl.: G05B 19/4061, G05B 23/00, E05F 15/00, E06B 9/82, H02H 7/085

(54) **PROCÉDÉ DE RÉGLAGE D'UNE INSTALLATION DOMOTIQUE ET OUTIL POUR LA MISE EN OEUVRE D'UN TEL PROCÉDÉ**
VERFAHREN ZUM JUSTIEREN EINER DOMOTIK-ANLAGE UND WERKZEUG ZU SEINER IMPLEMENTIERUNG
METHOD FOR ADJUSTING A DOMOTIC INSTALLATION AND TOOL FOR IMPLEMENTING SAME

(30) Priorité: 07.03.2007 FR 0701648
(43) Date de publication de la demande: 06.01.2010
(73) Titulaire: Somfy SAS, 74300 Cluses (FR)
(72) Inventeur: BOTTOLLIER, Stéphane, F-74700 Cordon (FR); MONTENOT, Jean, F-74250 Fillinges (FR)
(74) Mandataire: Bugnion Genève
(86) Numéro de dépôt international: PCT/IB2008/050798
(87) Numéro de publication internationale: WO 2008/107850

(56) Documents cités:
- WO-A-99/47780
- US-A1- 2003 193 304
- US-A1- 2003 210 005
- US-B1- 7 116 072

## Description

L'invention se rapporte à un outil de réglage semi-automatique pour portes et portails motorisés. L'invention se rapporte également à un actionneur motorisé pour porte ou portail susceptible de coopérer avec le dispositif de réglage et à une installation comprenant une porte ou portail motorisé, un actionneur et un outil de réglage selon l'invention. L'invention se rapporte enfin à un procédé de réglage.

Un problème posé par les portes et portails automatisés est celui de la sécurité en cas d'obstacle et notamment en cas de présence humaine ou animale dans la trajectoire de l'écran mobile : un jeune enfant ou un animal domestique surpris par la manoeuvre automatique. Afin d'éviter les conséquences fâcheuses d'une collision, il est prévu de limiter autant que possible la puissance de l'actionneur, de manière à ce que ce dernier fournisse la puissance juste nécessaire au mouvement et que l'énergie en cas de collision inopinée soit limitée. Des normes sont établies afin de définir les valeurs maximales d'énergie, de quantité de mouvement, d'effort statique et/ou d'effort dynamique sur un obstacle.

En général, un potentiomètre de réglage permet d'ajuster des paramètres de fonctionnement du moteur. La présence d'un tel élément de réglage est commune dans les dispositifs de l'état de la technique. Ce potentiomètre est généralement ajusté par l'installateur, par exemple en fonction du type d'écran mobile, de son comportement et des règles du métier. Cependant, des actionneurs sont parfois vendus dans des réseaux de grande distribution et installés par des utilisateurs peu expérimentés. Le risque est alors grand que le potentiomètre soit calé sur une valeur maximum par souci de rapidité et pour éviter les risques d'arrêts intempestifs présentés par un réglage minimum, ce qui présente les dangers mentionnés.

La demande de brevet FR 2 849 553 décrit une installation comprenant un actionneur muni d'un système de réglage semi-automatique. Cet actionneur comporte un capteur de force disposé entre la sortie du moteur et la barrière mobile, par exemple une porte de garage. Le capteur de force est par exemple un capteur mesurant le courant dans le moteur, donc le couple de ce dernier. A partir du moment où l'actionneur est activé, on mesure un premier « pic de force », ignoré, puis un second dont la valeur va permettre de calibrer les seuils de détection d'obstacle. Le premier pic de force est manifestement lié à l'inertie de la porte, il est donc ignoré. Le second pic correspond par exemple à l'arrivée en butée. Sa valeur est intéressante, puisqu'elle permet d'activer une rétro-action de réglage du moteur et garantit un fonctionnement peu dépendant de la température. L'art antérieur est riche en procédés de ce type : on trouve un procédé tout à fait semblable dans le brevet FR 2 696 884 consacré à une motorisation de fenêtre d'automobile.

Le brevet US 6,741,052 améliore la connaissance des forces antagonistes exercées directement sur un panneau de porte à l'aide d'un capteur dont ni la nature ni la position ne sont précisées. Ce capteur permet de déterminer les efforts s'opposant au mouvement motorisé de la porte lors d'un fonctionnement normal, notamment par la détermination de zones sur la trajectoire, comme il est connu de l'art antérieur. Il permet un meilleur ajustement automatique de seuils, tout en laissant la possibilité d'ajustements manuels. Cependant, par sécurité, la plage de fonctionnement des potentiomètres de réglage est limitée.

Cependant, ces procédés présentent l'inconvénient d'être relativement aveugles en ce qui concerne l'effet réel sur un obstacle, alors qu'il s'agit du problème essentiel. Il n'est notamment pas tenu compte de l'effet dû à l'inertie de la porte entraînée. De plus, ces procédés multiplient le nombre de capteurs disposés à demeure sur l'installation, donc entraînent un surcoût de celle-ci.

On connaît aussi du document WO 99/47780 un dispositif de support d'un capteur d'effort pour mesurer les efforts exercés par des ouvrants en différents points de leur course. Un tel dispositif nécessite une intervention humaine pour interpréter les données d'efforts et les rendre utilisables par un actionneur de manoeuvre des ouvrants. Les données doivent éventuellement être converties ou traduites pour être utilisables par l'actionneur.

Le but de l'invention est de fournir un procédé de réglage obviant aux inconvénients identifiés précédemment et améliorant les procédés de réglage connus de l'art antérieur. En particulier, l'invention propose un procédé de réglage permettant de sélectionner une stratégie de commande, c'est-à-dire un ensemble de paramètre de commande d'un actionneur d'élément domotique, de manière à maîtriser au mieux les conditions dans lesquelles celui-ci entrera ultérieurement en contact avec un obstacle. L'invention propose de plus que le procédé permette de se passer de toute intervention humaine d'interprétation et/ou de traduction et/ou de conversion et/ou de transmission des données. L'invention concerne aussi un outil de réglage permettant la mise en oeuvre d'un tel procédé.

Le dessin annexé représente, à titre d'exemple, un mode de réalisation d'un outil de réglage selon l'invention et un mode d'exécution d'un procédé de réglage selon l'invention.

Le procédé selon l'invention est défini par la revendication 1.

Différents modes d'exécution du procédé sont définis par les revendications dépendantes 2 à 7.

L'outil de réglage selon l'invention est défini par la revendication 8.

Différents modes de réalisation de l'outil de réglage sont définis par les revendications dépendantes 9 à 14.

L'actionneur selon l'invention est défini par la revendication 15.

Le dessin annexé illustre, à titre d'exemple, un mode de réalisation d'un outil de réglage selon l'invention et un mode d'exécution d'un procédé de réglage selon l'invention.
La figure 1 décrit une installation comprenant un outil de réglage selon l'invention.
La figure 2 décrit un actionneur d'une telle installation.
La figure 3 décrit un mode de réalisation d'un outil de réglage selon l'invention.
La figure 4 décrit un mode d'exécution d'un procédé de réglage selon l'invention.

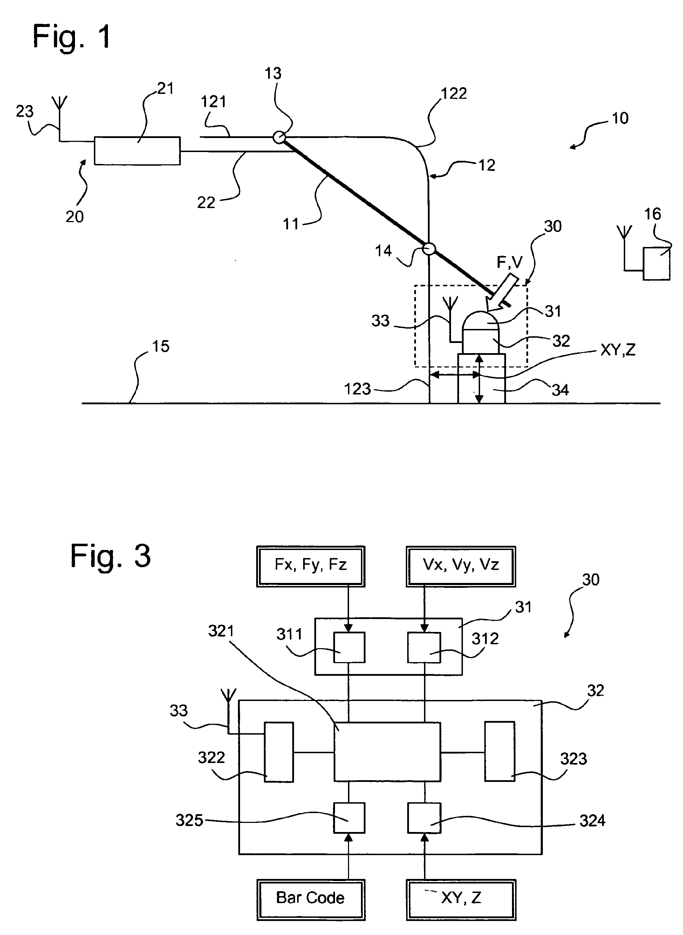

L'installation 10 représentée en figure 1 comprend un élément domotique mobile, par exemple un écran mobile 11, et notamment une porte basculante pour garage. L'écran mobile est guidé par une coulisse 12 qui sert de rail de guidage à une roulette supérieure 13 et à une roulette inférieure 14. L'axe de la roulette supérieure 13 est fixé à l'extrémité supérieure de l'écran mobile, et cette roulette se déplace essentiellement en contact avec une partie de coulisse horizontale 121 . L'axe de la roulette inférieure 14 est fixé dans le tiers inférieur de l'écran mobile, et cette roulette se déplace essentiellement en contact avec une partie de coulisse verticale 123. Les parties de coulisse verticale et horizontale sont raccordées par une partie de coulisse courbe 122. De ce fait, la cinématique l'écran mobile est complexe lors d'une opération de fermeture.

L'écran mobile est manoeuvré électriquement par un dispositif électromécanique 20, dont la fixation au bâti n'est pas représentée pour simplifier la figure. Le dispositif électromécanique comprend un actionneur 21, une sortie mécanique 22 raccordée à l'écran mobile et permettant de transmettre à celui-ci un mouvement de l'actionneur, et une antenne de réception 23 pour la réception d'ordres ou d'informations.

L'installation 10 comprend enfin, au moins provisoirement, un outil de réglage 30, positionné de manière à entrer en collision avec l'écran mobile quand celui-ci se déplace. L'outil de réglage comprend un capteur de choc 31, susceptible de mesurer la force F exercée sur le capteur et la vitesse V de l'écran mobile au moment de la collision, ou alternativement toute grandeur statique et toute grandeur dynamique caractérisant la collision. L'outil de réglage comprend également un analyseur 32 et une antenne d'émission 33 permettant d'adresser vers le dispositif électromécanique 20 des ordres de mouvement et des informations relatives au choc ou à la collision.

L'outil de réglage est disposé sur un socle mobile 34 posé sur le sol 15. Le socle mobile est réglable en position horizontale XY, et en hauteur Z, de manière à ce que la collision puisse avoir lieu en un point prédéterminé. Dans ce cas, le socle mobile définit un point de butée. L'installation comprend enfin une télécommande nomade 16 permettant d'envoyer par radio des ordres de mouvement vers le dispositif électromécanique.

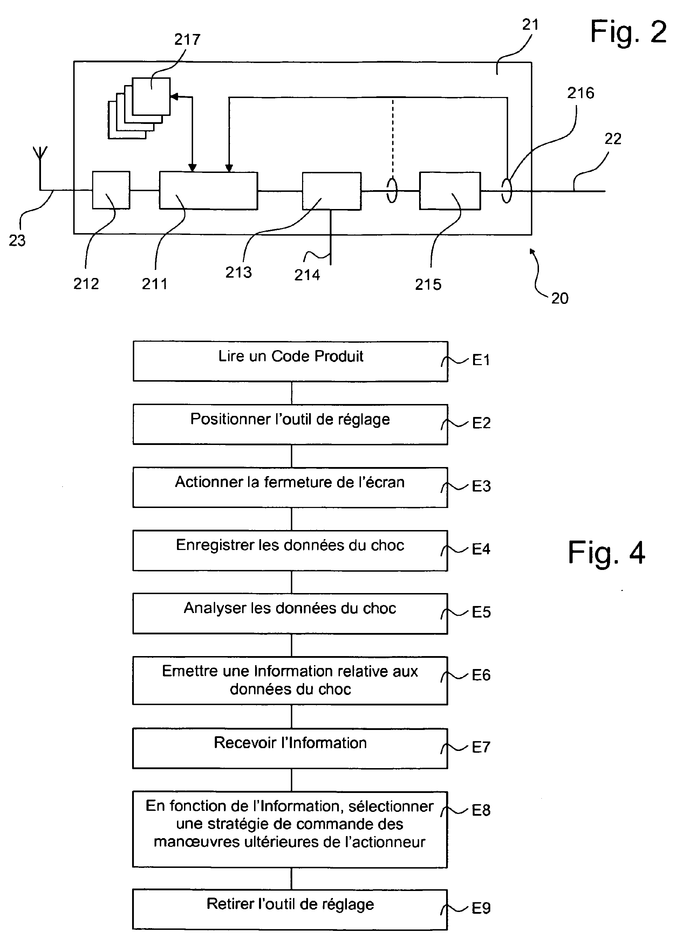

La figure 2 représente plus en détail le dispositif électromécanique 20 selon l'invention, et plus particulièrement l'actionneur 21. Celui-ci comprend un microcontrôleur 211, un récepteur radio 212 raccordé à l'antenne de réception et au microcontrôleur. Une sortie du microcontrôleur est raccordée à un convertisseur 213, permettant d'alimenter un motoréducteur 215 à partir d'une source électrique 214, par exemple le secteur alternatif. Le convertisseur transforme par exemple la tension alternative du secteur en tension continue et adapte la puissance fournie au moteur en fonction des données fournies sur la sortie du microcontrôleur. En fonction de ces données, le convertisseur adapte de même les polarités de tension fournie au motoréducteur de manière à ce que celui-ci tourne dans le sens désiré. La liaison entre la sortie du microcontrôleur et le convertisseur est en général multifilaire.

La sortie du motoréducteur est raccordée à la sortie mécanique 22 de l'actionneur. Comme dans l'art antérieur, un capteur interne d'effort 216 permet une mesure du couple, ou selon les cas, de l'effort linéaire, exercé par le motoréducteur sur l'écran mobile. Alternativement, la mesure peut avoir lieu au niveau de l'alimentation du motoréducteur, sous forme par exemple de mesure de courant, selon une position représentée par un trait pointillé.

Une table 217, logée dans une mémoire électronique, comprend un ensemble de données de calibrage pour le fonctionnement. Les données de calibrage sont pré-enregistrées et lues par le microcontrôleur. Cependant, certaines données de calibrage peuvent également être écrites dans la table par le micro-contrôleur au cours du processus de réglage. Alternativement, les données ne sont pas pré-enregistrées mais reçues en bloc par le récepteur radio lors d'une phase préalable au réglage proprement dit, et retranscrites sans plus de traitement dans la table par le microcontrôleur.

La table 217 est représentée sous forme d'un ensemble de pages mémoire. Cette représentation montre que les données de calibrage contenues dans la table sont organisées, par exemple par types de produits et, à l'intérieur d'un type de produit, par portion de trajectoire.

Contrairement aux dispositifs de l'art antérieur, la sélection de données de calibrage ne provient pas seulement de mesures d'un potentiomètre de réglage, l'accès à celui-ci étant si possible supprimé dans le cadre de l'invention, et/ou d'un capteur interne d'effort mais aussi, voire principalement, d'une information reçue par le récepteur radio, suite à la réalisation d'un choc réel sur obstacle, l'outil de réglage lui-même prenant part à la collision.

La figure 3 décrit plus en détail l'outil de réglage 30.

Le capteur de choc 31 comprend un capteur d'effort 311, destiné par exemple à mesurer des efforts statiques. Le capteur d'effort mesure par exemple les composantes Fx, Fy et Fz de la force F appliquée sur le capteur après la collision. Le capteur d'effort peut notamment comprendre des jauges de contraintes pour mesurer des déformations de l'outil de réglage et des moyens pour en déduire les caractéristiques de l'effort appliqué à l'outil de réglage. Dans une version simplifiée, seule la composante verticale Fz de la force est mesurée. Alternativement, le capteur d'effort mesure également la valeur de crête prise par la force. Le capteur d'effort 311 peut aussi mesurer les valeurs instantanées de la force F, ces valeurs étant stockées et exploitées par le dispositif situé en aval.

Le capteur de choc 31 comprend également un capteur de vitesse 312 destiné à mesurer les paramètres de vitesse de l'écran mobile au moment du choc. Ces paramètres permettent par exemple par la suite d'identifier le type d'écran mobile, en différenciant sans ambiguïté une porte basculante (présence d'une composante horizontale de vitesse) et une porte sectionnelle (pas de composante horizontale de vitesse). Ils permettent également des calculs énergétiques. Le capteur de choc peut comprendre une première partie et une deuxième partie. La première partie est destinée à recevoir le contact de l'élément mobile pendant le procédé de réglage, cette première partie étant mobile selon une, deux ou trois directions par rapport à la deuxième partie et rappelée dans une position de repos par un ou plusieurs moyens élastiques tels que des ressorts. Des moyens sont alors prévus pour mesurer les déplacements de la première partie par rapport à la deuxième partie. Cette mesure des déplacements peut être faite parallèlement à chaque direction dans laquelle la première partie peut être déplacée relativement à la deuxième.

La sortie du capteur d'effort et la sortie du capteur de vitesse sont reliées à une unité de commande 321 de l'analyseur 32, équipée de moyens de stockage et de calcul et comprenant un programme de traitement. L'unité de commande est également raccordée à un émetteur radio 322 relié à l'antenne d'émission 33, et raccordée à une interface de commande 323, comprenant par exemple un clavier de commande et un écran. Le clavier de commande permet à l'installateur de donner des ordres de mouvement, communiqués au dispositif électromécanique par l'émetteur radio. Le clavier de commande permet également à l'installateur d'indiquer à l'unité de commande quelle est la position actuelle de l'outil de réglage.

L'écran permet d'afficher des instructions pour l'installateur, par exemple un menu de description de la prochaine étape de réglage et notamment dans quelle position placer l'outil de réglage.

L'écran permet aussi d'afficher les résultats de mesure du choc, pour information.

Pour simplifier la tâche de l'installateur, l'analyseur 32 comprend également un lecteur 325 permettant une identification du type de produit en cours d'essai, par exemple un scanner optique de code barre, ou alternativement un lecteur d'étiquette électronique.

De même, la position du capteur dans l'espace est préférentiellement déterminée à l'aide d'un détecteur de position 324, par exemple relié mécaniquement au socle 34 et comprenant plusieurs capteurs (relatifs ou absolus) de position. La hauteur par rapport au sol peut être mesurée par capteur ultrasonore.

L'outil de réglage comprend des moyens matériels et/ou logiciels de mise en oeuvre du procédé de réglage selon l'invention. Ces moyens comprennent des moyens matériels et/ou logiciels régissant le fonctionnement de l'outil de réglage conformément au procédé objet de l'invention. Notamment, l'outil de réglage comprend des moyens de transmission, depuis l'outil de réglage vers l'actionneur, d'une information caractéristique de la collision. L'outil peut comprendre en outre des moyens matériels et/ou logiciels d'analyse d'une collision. L'outil peut aussi comprendre des moyens matériels et/ou logiciels de détermination d'une information caractéristique de la collision à partir de l'analyse de la collision.

L'actionneur comprend des moyens matériels et/ou logiciels de mise en oeuvre du procédé de réglage selon l'invention. Ces moyens comprennent des moyens matériels et/ou logiciels régissant le fonctionnement de l'actionneur conformément au procédé objet de l'invention. Notamment, l'actionneur comprend des moyens de réception d'une information caractéristique de la collision et des moyens d'utilisation de cette information. Les moyens d'utilisation peuvent comprendre des moyens pour adapter le fonctionnement de l'actionneur en fonction de l'information caractéristique.

La figure 4 décrit un procédé de réglage selon l'invention.

Dans une première étape E1, le type de produit mobile (type de porte, type de portail, référence) est identifié, par exemple par lecture de code barre ou simplement par entrée sur le clavier de l'outil de réglage. Alternativement cette donnée est déjà enregistrée dans la mémoire de l'actionneur 21, et elle est communiquée par l'actionneur à l'outil de réglage si la liaison radio est bidirectionnelle.

Dans une deuxième étape E2, l'installateur positionne l'outil de réglage sur le trajet du produit mobile. Selon le type de produit, une seule position critique peut suffire pour le réglage. Cette position, dite position-cible, peut être indiquée sur une notice de réglage. Préférentiellement, la position-cible est communiquée à l'installateur sur l'écran, et l'installateur valide ensuite qu'il a correctement placé l'outil à l'aide du socle mobile. Ou encore, une mesure directe de position à l'aide du détecteur de position évite la validation.

Dans une troisième étape E3, on active la fermeture de l'écran à l'aide du dispositif électromécanique. L'ordre de fermeture est donné par l'installateur à l'aide du clavier de l'outil de réglage. Alternativement, l'ordre est envoyé automatiquement dès que l'outil de réglage a repéré qu'il est dans la bonne position. La fermeture de l'écran a donc lieu, préférentiellement à partir de sa position haute, jusqu'à collision avec le capteur de choc de l'outil de réglage.

Lors d'une quatrième étape E4, les données du choc sont enregistrées : profil de variation de l'effort, valeur de crête de l'effort, direction de l'effort, de même pour les vitesses.

Lors d'une cinquième étape E5, les données du choc sont analysées, notamment en comparaison de seuils prédéfinis pour des raisons de sécurité. Le type de produit peut intervenir dans l'analyse.

Inversement, l'analyse peut permettre de déterminer le type de produit, par exemple à partir des composantes horizontale et verticale de vitesse et de la position du capteur de choc.

De l'analyse découle au moins une information quantitative sur le choc, et qualitative : est-il au-dessus ou non d'un seuil critique. L'ensemble constitue une information transmise dans une sixième étape E6 vers le dispositif électromécanique.

Ce dernier reçoit l'information lors d'une septième étape E7.

Dans une huitième étape E8, l'information est utilisée par le microcontrôleur de l'actionneur pour sélectionner dans la table 217 un ensemble de données servant de gabarit pour la commande de puissance du motoréducteur lors des manoeuvres de fermeture ultérieures.

Alternativement, l'information est utilisée pour sélectionner un ensemble de données servant de gabarit pour la sensibilité de détection du capteur interne d'effort 216.

Alternativement, l'information est utilisée pour ajuster les coefficients ou certaines branches d'un algorithme de commande.

Selon le type de produit, le procédé peut boucler sur la deuxième étape E2 afin de provoquer une collision dans une deuxième position-cible, et ainsi permettre d'affiner la sélection de la huitième étape E8.

Pendant la huitième étape, le microcontrôleur utilise avantageusement les mesures du capteur interne d'effort 216 pour les corréler aux données relatives au choc et ainsi faciliter le calibrage.

Dans une dernière étape E9, on enlève l'outil de réglage de manière à permettre le fonctionnement normal de l'installation.

Le procédé de réglage permet donc d'éviter le recours à un réglage manuel des caractéristiques de l'actionneur et d'optimiser ce réglage par l'utilisation de données sur l'effet réel d'une collision.

Il est cependant susceptible de nombreuses variantes.

L'étape E1 est facultative. Elle est avantageusement remplacée par une identification automatique du type de produit à partir des données recueillies lors de la première collision. Par ailleurs, il peut-être préférable d'utiliser un seul type d'outil de réglage par type de produit à régler.

L'étape d'analyse E5 peut avoir lieu au sein de l'actionneur 21 plutôt qu'au sein de l'outil de réglage. Dans ce cas, elle prend place pendant l'étape E8 du procédé : les données du choc sont simplement mesurées et enregistrées par l'outil de réglage lors de l'étape E4, puis sont directement émises vers le dispositif électromécanique, constituant la seule information. C'est le microcontrôleur 211 qui traite alors l'ensemble de ces données pour les analyser, le processus de sélection de l'étape E8 comprenant l'analyse des données.

Dans tous les cas, l'invention permet de donner à l'ensemble de la procédure un caractère suffisamment automatique pour éviter les erreurs de réglage résultant de l'intervention humaine et/ou de l'appréciation de l'installateur. En effet, les données du choc sont transmises de l'outil de réglages à l'actionneur sans que l'utilisateur ait nécessairement connaissance de celles-ci. La transmission entre l'outil de réglage et l'actionneur n'est pas nécessairement directe. Notamment, les données peuvent transiter par un dispositif émetteur-récepteur.

Un avantage de l'invention est de permettre un mode de réalisation simplifiée dans lequel l'outil de réglage est spécifique d'un type de produit et présente des dimensions telles qu'il suffit de le poser au sol pour réaliser l'essai dans la bonne position-cible, celle-ci étant alors unique. L'interface de commande 323 est avantageusement supprimée et remplacé par la télécommande nomade 16 s'il s'agit uniquement de transmettre des ordres de commande de mouvement. Enfin un léger mouvement d'aller-retour de l'écran mobile peut indiquer à l'installateur que la procédure de réglage a eu lieu correctement à l'issue d'une collision. Le capteur de choc peut ne mesurer que la composante verticale et le capteur de vitesse peut être omis dans cette version simplifiée. Ainsi, l'outil de réglage devient un accessoire des plus simples qui peut être conservé par le propriétaire de l'installation pour vérifier annuellement le bon fonctionnement de celle-ci et permettre un recalibrage éventuel. Un seul outil est alors nécessaire pour une maison comprenant par exemple deux garages et un portail d'entrée.

Inversement, l'outil de réglage peut utiliser un micro-ordinateur complet, par exemple un ordinateur portable, pour constituer tous les moyens d'interface, de stockage et de calcul de l'analyseur 32. La liaison entre le capteur de choc 31 et ce micro-ordinateur peut être filaire, avec une interface universelle série (USB), ou infrarouge ou encore radio. Cette solution peut s'avérer plus économique à mettre en oeuvre qu'une réalisation spécifique.

L'invention a été décrite dans le cas où l'outil de réglage est immobile au moment du choc avec l'écran mobile. Une première variante de réalisation consiste à disposer l'outil de réglage dans la partie basse de l'écran mobile, à l'aide d'un moyen de fixation provisoire. Le choc a donc lieu entre l'outil de réglage et le socle mobile, qui définit un point de butée. La faible masse de l'outil de réglage ne modifie guère l'inertie de l'écran mobile, ce qui procure sensiblement les mêmes résultats que si l'outil de réglage était fixe. Cette variante présente l'avantage d'avoir à déplacer uniquement le socle mobile 34 lors des différents essais et de ne pas se préoccuper de la trajectoire précise de l'écran mobile si le socle mobile présente une largeur suffisante.

Une deuxième variante de réalisation permet d'intégrer la fonction du socle mobile avec un outil de réglage selon la première variante, c'est-à-dire disposé sur l'écran mobile, en un seul ensemble de mesure, de hauteur prédéterminée ou réglable. Le choc a donc lieu directement entre l'outil de réglage et le sol. Cet ensemble de mesure est disposé dans la partie basse de l'écran mobile, à l'aide d'un moyen de fixation provisoire de type rotule. L'ensemble de mesure se comporte donc comme un pendule rigide, sensiblement vertical, et le choc se produit entre l'ensemble de mesure et le sol, en un endroit qu'il est inutile de prédéterminer. Cet endroit sur le sol définit un point de butée.

Dans tous les cas, l'outil de réglage prend directement part à la collision. La collision a lieu soit entre le produit mobile et l'outil de réglage maintenu par le point de butée, soit entre l'outil de réglage supporté par le produit mobile et le point de butée.

Le capteur de choc peut aussi comprendre un dispositif déformable, tel qu'un ballon, contenant un gaz dont on mesure la pression avant, pendant et après le choc. La température du gaz peut également être mesurée.

L'invention a été décrite dans le cas de liaison radio, qui présente un grand avantage de simplicité. Il est clair que la liaison entre les éléments pourrait-être d'une autre nature, par exemple filaire ou infra-rouge. La liaison peut également être bidirectionnelle. L'invention s'applique de même à un portail ou à tout type de fermeture du bâtiment activable automatiquement et présentant un risque pour la sécurité des usagers. L'invention est utilisée avec profit en combinaison avec les techniques d'auto-apprentissage de l'art antérieur, qu'elle permet de compléter utilement pour une meilleure sécurité, en apportant une information complémentaire sur la collision avec un obstacle. Ainsi, l'installation peut-elle initialement fonctionner avec une méthode d'apprentissage de l'art antérieur jusqu'au moment où l'installateur vient la sécuriser à l'aide de l'outil de réglage et du procédé selon l'invention.

Lorsque le mode de réalisation de l'outil de réglage est suffisamment économique, et que celui-ci est conçu pour être disposé sur le produit mobile lui-même, il restera disposé sans inconvénient sur ce produit mobile de manière à contribuer à la détection de chocs lors des manoeuvres normales ultérieures, et de manière à permettre également un réglage périodique. Le maintien de l'outil en place n'est possible que si la configuration géométrique de l'outil de réglage est compatible avec la manoeuvre normale du produit mobile.

Par « information caractéristique de la collision », il faut entendre une information de type décrit en référence à la description du procédé. En particulier, une information binaire relative à la détection ou non-détection d'une collision ne constitue pas une information caractéristique de la collision.

L'invention a été décrite dans le cas d'une liaison radio entre l'outil de réglage et l'actionneur. Tout autre support de transmission de l'information convient. La liaison peut par exemple être de type filaire si le capteur est fixé sur l'écran mobile.

## Revendications

1. Procédé de réglage d'un actionneur (21) d'un élément mobile (11) d'une installation domotique (10), comprenant :
- une étape de mise en place d'un outil de réglage (30) apte à être placé sur le trajet de l'élément mobile, entre l'élément mobile et un point de butée (34),
- une étape de mise en mouvement de l'élément mobile pour provoquer une collision à laquelle prend part l'outil de réglage,
**caractérisé en ce qu'**il comprend :
- une étape de transmission, depuis l'outil de réglage vers l'actionneur, d'une information caractéristique de la collision, et
- une étape d'utilisation par l'actionneur de l'information caractéristique de la collision pour sélectionner une stratégie de commande des manoeuvres ultérieures de l'actionneur,
la transmission entre l'outil de réglage et l'actionneur étant directe ou transitant par un dispositif émetteur-récepteur.

2. Procédé selon la revendication 1, **caractérisé en ce qu'**une étape de retrait de l'outil de réglage suit l'étape de transmission.

3. Procédé selon l'une des revendications précédentes, **caractérisé en ce que** l'information caractéristique de la collision comprend des données de vitesse de l'élément mobile et/ou des données d'effort mesurées lors de la collision.

4. Procédé selon l'une des revendications précédentes, **caractérisé en ce qu'**il comprend une étape de reconnaissance du type de l'élément mobile.

5. Procédé selon l'une des revendications précédentes, **caractérisé en ce qu'**il comprend la suppression de l'accès à un potentiomètre de réglage.

6. Procédé selon l'une des revendications précédentes, **caractérisé en ce que** l'étape d'utilisation par l'actionneur de l'information caractéristique de la collision comprend l'utilisation de mesures d'un capteur interne d'effort (216) pour les corréler aux données relatives à un choc et ainsi faciliter le calibrage.

7. Procédé selon l'une des revendications précédentes, **caractérisé en ce qu'**il est dépourvu de toute intervention humaine d'interprétation et de traduction et de conversion et de transmission des données.

8. Outil de réglage (30) comprenant des moyens matériels (31, 32, 321, 322, 33) et logiciels de mise en oeuvre du procédé selon l'une des revendications 1 à 7.

9. Outil de réglage selon la revendication 8, **caractérisé en ce qu'**il comprend un moyen de fixation à l'élément domotique mobile.

10. Outil de réglage selon la revendication 8 ou 9, **caractérisé en ce que** les moyens matériels comprennent un capteur de choc (31) et un analyseur (32), ce dernier comprenant une unité de commande (321) et un moyen (322, 33) d'émission d'information.

11. Outil de réglage selon la revendication précédente, **caractérisé en ce que** l'analyseur comprend un micro-ordinateur.

12. Outil de réglage selon l'une des revendications 8 à 11, **caractérisé en ce que** les moyens logiciels comprennent des programmes informatiques régissant le fonctionnement de l'outil de réglage.

13. Outil de réglage selon l'une des revendications 8 à 12, **caractérisé en ce que** le capteur de choc comprend un capteur d'effort (311) et/ou un capteur de vitesse (312) et/ou un capteur de déplacement et/ou un capteur de pression.

14. Outil de réglage selon l'une des revendications 8 à 13, **caractérisé en ce qu'**il comprend un moyen permettant une identification du type de produit en cours d'essai.

15. Actionneur (21) d'un élément mobile (11) d'une installation domotique (10), comprenant des moyens (23, 212, 211, 217) matériels et logiciels aptes à recevoir et à utiliser l'information caractéristique de la collision résultant du procédé de réglage des revendications 1 à 7.

## Claims

1. Method for adjusting an actuator (21) of a mobile element (11) of a home automation installation (10), comprising:
- a step for putting in place an adjustment tool (30) that can be placed on the path of the mobile element, between the mobile element and an end-stop point (34),
- a step for moving the mobile element to provoke a collision in which the adjustment tool takes part,
**characterized in that** it comprises:
- a step of transmission, from the adjustment tool to the actuator, of information characteristic of the collision, and
- a step of use by the actuator of the information characteristic of the collision to select a control strategy for subsequent operations of the actuator,
the transmission between the adjustment tool and the actuator being direct or passing through a transmitter-receiver device.

2. Method according to Claim 1, **characterized in that** a step for removal of the adjustment tool follows the transmission step.

3. Method according to one of the preceding claims, **characterized in that** the information characteristic of the collision comprises mobile element speed data and/or force data measured during the collision.

4. Method according to one of the preceding claims, **characterized in that** it comprises a step of recognition of the type of the mobile element.

5. Method according to one of the preceding claims, **characterized in that** it comprises the suppression of the access to an adjustment potentiometer.

6. Method according to one of the preceding claims, **characterized in that** the step of use by the actuator of the information characteristic of the collision comprises the use of measurements from an internal force sensor (216) in order to correlate them with the data relating to an impact and thus facilitate the calibration.

7. Method according to one of the preceding claims, **characterized in that** it contains no human intervention for interpretation and translation and conversion and transmission of the data.

8. Adjustment tool (30) comprising hardware means (31, 32, 321, 322, 33) and software means for implementing the method according to one of Claims 1 to 7.

9. Adjustment tool according to Claim 8, **characterized in that** it comprises a means for fixing to the mobile home automation element.

10. Adjustment tool according to Claim 8 or 9, **characterized in that** the hardware means comprise an impact sensor (31) and an analyser (32), the latter comprising a control unit (321) and an information transmission means (322, 33).

11. Adjustment tool according to the preceding claim, **characterized in that** the analyser comprises a microcomputer.

12. Adjustment tool according to one of Claims 8 to 11, **characterized in that** the software means comprise computer programs governing the operation of the adjustment tool.

13. Adjustment tool according to one of Claims 8 to 12, **characterized in that** the impact sensor comprises a force sensor (311) and/or a speed sensor (312) and/or a displacement sensor and/or a pressure sensor.

14. Adjustment tool according to one of Claims 8 to 13, **characterized in that** it comprises a means allowing for an identification of the type of product during testing.

15. Actuator (21) of a mobile element (11) of a home automation installation (10), comprising hardware and software means (23, 212, 211, 217) capable of receiving and using the information characteristic of the collision resulting from the adjustment method of Claims 1 to 7.

## Patentansprüche

1. Verfahren zur Einstellung des Antriebs (21) eines beweglichen Elements (11) in einer haustechnischen Anlage (10), enthaltend:
- einen Schritt zur Platzierung eines Einstellwerkzeugs (30), welches auf dem Verschiebungsweg des beweglichen Elements zwischen dem beweglichen Element und einem Anschlagspunkt (34) angeordnet werden kann, und
- einen Schritt zur Einleitung der Bewegung des beweglichen Elements zur Veranlassung einer Kollision, an der das Einstellwerkzeug beteiligt ist,
**dadurch gekennzeichnet, dass** das Verfahren folgende Schritte aufweist:
- einen Schritt zur Übertragung einer für die Kollision charakteristischen Information vom Einstellwerkzeug zum Antrieb, und
- einen Schritt zur Verwendung der für die Kollision charakteristischen Information durch den Antrieb zwecks Auswahl einer Strategie zur Steuerung der weiteren Betätigungsschritte des Antriebs,
wobei die Übertragung zwischen dem Einstellwerkzeug und dem Antrieb unmittelbar oder über eine Vorrichtung mit Sender und Empfänger erfolgt.

2. Verfahren nach Anspruch 1, **dadurch gekennzeichnet, dass** auf den Schritt der Übertragung ein weiterer Schritt zum Zurückziehen des Einstellwerks erfolgt.

3. Verfahren nach einem der vorstehenden Ansprüche, **dadurch gekennzeichnet, dass** die für die Kollision charakteristische Information Daten über die Geschwindigkeit des beweglichen Elements und/oder Daten über die Beanspruchung umfasst, wobei diese Daten bei der Kollision gemessen werden.

4. Verfahren nach einem der vorstehenden Ansprüche, **dadurch gekennzeichnet, dass** es weiterhin einen Schritt zum Erkennen der Art des beweglichen Elements aufweist.

5. Verfahren nach einem der vorstehenden Ansprüche, **dadurch gekennzeichnet, dass** es die Sperre des Zuganges eines Einstellpotentiometers umfasst.

6. Verfahren nach einem der vorstehenden Ansprüche, **dadurch gekennzeichnet, dass** der Schritt zur Verwendung der für die Kollision charakteristischen Information durch den Antrieb die Verwendung von Messwerten eines internen Beanspruchungssensors (216) zwecks Abgleich mit Daten bezüglich eines Stossvorganges umfasst, wodurch die Kalibrierung erleichtert wird.

7. Verfahren nach einem der vorstehenden Ansprüche, **dadurch gekennzeichnet, dass** jeglicher menschliche Eingriff zur Interpretation, zur Übersetzung, zur Umwandlung und zur Übertragung von Daten abwesend ist.

8. Einstellwerkzeug (30), welches Hardwaremittel (31, 32, 321, 322, 33) und Softwaremittel zur Ausführung des Verfahrens nach einem Ansprüche 1 bis 7 aufweist.

9. Einstellwerkzeug nach Anspruch 8, **dadurch gekennzeichnet, dass** es ein Mittel zur Befestigung am beweglichen haustechnischen Element aufweist.

10. Einstellwerkzeug nach Anspruch 8 oder 9, **dadurch gekennzeichnet, dass** die Hardwaremittel einen Stossfühler (31) und einen Analysator (32) aufweisen, wobei letzterer eine Steuereinheit (321) und ein Mittel zum Senden von Informationen (322, 33) umfasst.

11. Einstellwerkzeug nach vorstehendem Anspruch, **dadurch gekennzeichnet, dass** der Analysator einen Mikrocomputer aufweist.

12. Einstellwerkzeug nach einem der Ansprüche 8 bis 11, **dadurch gekennzeichnet, dass** die Softwaremittel Informatikprogramme enthalten, welche den Betrieb des Einstellwerkzeugs steuern.

13. Einstellwerkzeug nach einem der Ansprüche 8 bis 12, **dadurch gekennzeichnet, dass** der Stossfühler einen Belastungssensor (311) und/oder einen Geschwindigkeitsfühler (312) und/oder einen Bewegungsfühler und/oder einen Druckfühler aufweist.

14. Einstellwerkzeug nach einem der Ansprüche 8 bis 13, **dadurch gekennzeichnet, dass** es ein Mittel zur Identifizierung der Art des Produktes, welches untersucht wird, umfasst.

15. Antrieb (21) eines beweglichen Elements (11) einer haustechnischen Anlage (10), welcher Hardwaremittel (23, 212, 211, 217) sowie Softwaremittel aufweist, die in der Lage sind, die für die Kollision charakteristischen Informationen, welche beim Einstellverfahren gemäss den Ansprüchen 1 bis 7 anfallen, zu empfangen und zu verwenden.
